# EUROPEAN PATENT SPECIFICATION

(11) **EP 3 029 974 B1**
(45) Date of publication and mention of the grant of the patent: **20.04.2022**
(21) Application number: 13890760.5
(22) Date of filing: 02.08.2013
(51) Int. Cl.: H04W 16/08, H04W 36/00

(54) **BASE STATIONS FOR INFORMATION INTERACTION AND COMMUNICATION SYSTEM**
BASIS STATIONEN FÜR INFORMATIONSINTERAKTIONEN UND KOMMUNIKATIONSSYSTEM
STATION DE BASES POUR INTERACTION PAR INFORMATION ET SYSTÈME DE COMMUNICATION

(43) Date of publication of application: 08.06.2016
(73) Proprietor: FUJITSU CONNECTED TECHNOLOGIES LIMITED, Kanagawa 211-8588 (JP)
(72) Inventor: WU, Lianhai, Beijing 100025 (CN); LI, Zhaojun, Beijing 100025 (CN); WANG, Weiwei, Beijing 100025 (CN); XU, Haibo, Beijing 100025 (CN)
(74) Representative: Haseltine Lake Kempner LLP
(86) International application number: PCT/CN2013/080742
(87) International publication number: WO 2015/013982

(56) References cited:
- EP-A1- 3 018 928
- CN-A- 101 102 606
- CN-A- 101 115 275
- CN-A- 103 209 416
- US-A1- 2010 173 626
- US-B1- 6 430 168
- CATT: "Solutions for failures incurred by AAS", 3GPP DRAFT; R3-130827, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Fukuoka, Japan; 20130520 - 20130524 10 May 2013 (2013-05-10), XP050700863, Retrieved from the Internet: URL:http://www.3gpp.org/ftp/tsg_ran/WG3_Iu /TSGR3_80/Docs/ [retrieved on 2013-05-10]

## Description

### Technical Field

The present disclosure relates to the field of communications, and in particular to base stations and a communication system.

### Background

Currently, an active antenna system (AAS) is taken into account in 3GPP Rel. 12. A base station configured with an AAS may dynamically adjust parameters of an antenna group, so that coverage of a cell changes dynamically to satisfy demands of traffics.

Cell splitting is one of ways for the AAS to achieve improvement of system capacity. The cell splitting considered in 3GPP refers to that split cells employ different physical cell identities (PCIs), with a temporal granularity of the splitting being relatively large, such as changing once per hour, or changing once at a longer time.

And on the other hand, what corresponds to the cell splitting is cell merging. The cell splitting or the cell merging may be triggered by operation administration and maintenance (OAM) or an eNB. By cell splitting or cell merging, a cell may be deployed flexibly, thereby satisfying different demands in multiple scenarios.

CATT: "Solutions for failures incurred by AAS," R3-130827: 3GPP TSG RAN WG3 Meeting #80, Fukuoka, Japan, May 20-24, 2013, discusses connection failure due to cell splitting/merging and proposes possible optimization mechanisms.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

### Summary

However, it was found by the inventors that in a process of cell splitting or cell merging in the prior art, if it is appeared that UE of a neighboring cell is handed over to a cell that is being split or merged, it is possible that a handover failure will be resulted due to appearance or disappearance of the cell, and it is possible that subsequent reestablishment will not succeed.

Embodiments of the present disclosure provide two base stations and a communication system, with an object being that a handover failure of a UE will not result in a reestablishment failure in a process of cell splitting or cell merging.

Aspects of the invention are set out in the accompanying claims to which reference should be made.

An advantage of the embodiments of the present disclosure exists in that the base station notifies the neighboring base station that a split cell is to be shrunk in coverage or a merged cell is to be closed; and when a UE under the neighboring base station needs to be handed over to the split cell or the merged cell, reestablishment cell information at least containing information on the split cell or information on the merged cell is prepared for the UE. Hence, not only a reestablishment failure will not be resulted after a handover failure, but also signaling overhead may be saved.

With reference to the following description and drawings, the particular embodiments of the present disclosure are disclosed in detail, and the principles of the present disclosure and the manners of use are indicated. It should be understood that the scope of the embodiments of the present disclosure is not limited thereto. The embodiments of the present disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

### Brief Description of the Drawings

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated or reduced.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.
Figure 1 is a schematic diagram of cell splitting;
Figure 2 is a schematic diagram of cell merging;
Figure 3 is a flowchart of the information interaction method of Embodiment 1 of the present disclosure;
Figure 4 is another flowchart of the information interaction method of Embodiment 1 of the present disclosure;
Figure 5 is a flowchart of the information interaction method of Embodiment 2 of the present disclosure;
Figure 6 is a flowchart of the information interaction example method of Embodiment 3 of the present disclosure;
Figure 7 is another flowchart of the information interaction example method of Embodiment 3 of the present disclosure;
Figure 8 is a flowchart of the information interaction example method of Embodiment 4 of the present disclosure;
Figure 9 is a schematic diagram of a structure of the base station of Embodiment 5 of the present disclosure;
Figure 10 is a schematic diagram of a structure of the base station of Embodiment 6 of the present disclosure; and
Figure 11 is a schematic diagram of a structure of the communication system of Embodiment 7 of the present disclosure.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope.

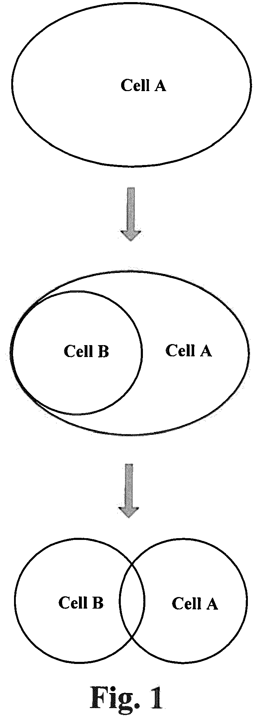

Figure 1 is a schematic diagram of cell splitting. As shown in Fig. 1, before occurrence of the cell splitting, only a cell A provides coverage for this area; then a split cell B occurs and completes configuration, but the coverage of the cell A has not been shrunk; and thereafter, the cell A completes handover of part of UEs, and its coverage is shrunk. Hence, the cell A may be split into two cells, and coverage is provided by the new cell B and the cell A with coverage being shrunk.

However, in taking a scenario of a process of cell splitting into account, a UE of a neighboring cell (such as a cell C) may expect to be handed over to the cell A with coverage being not shrunk. After handover preparation for the UE is finished, as the cell A has been shrunk in coverage, it will result in that the UE cannot finish handover. And at this moment, the UE will be reestablished in the cell B, but in handover preparation, a source base station may have not prepared necessary information for the reestablishment of the in the cell B, thereby resulting in a reestablishment failure of the UE.

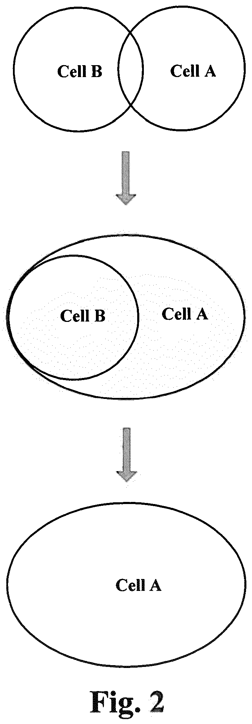

Figure 2 is a schematic diagram of cell merging. As shown in Fig. 2, before occurrence of cell merging, the cell A and the cell B provide coverage for this area; then the cell A is expanded in coverage and the cell B is not closed; thereafter, the cell B hands the served UE to the cell A or another cell, and the cell B is closed. Hence, the two cells A and B are merged into one cell, and the cell A expanded in coverage provides coverage for this area.

Correspondingly, in taking a scenario of a process of cell merging into account, a UE of a neighboring cell (such as a cell C) may expect to be handed over to the cell B which has not been closed. After handover preparation for the UE is finished, as the cell B has been closed, it will result in that the UE cannot be handed over. And at this moment, the UE will be reestablished in the cell A, but in handover preparation, a source base station may have not prepared necessary information for the reestablishment of the in the cell A, thereby resulting in a reestablishment failure of the UE.

It should be noted that for the sake of simplicity, scenarios of cell splitting and cell merging are only illustrated in Figs. 1 and 2. The present disclosure shall be described below in detail taking the scenarios shown in Figs. 1 and 2 as examples.

### Embodiment 1

An embodiment of the present disclosure provides an information interaction method, applicable to a first base station in which at least one second cell is split from a first cell. The method shall be described below from the first base station side.

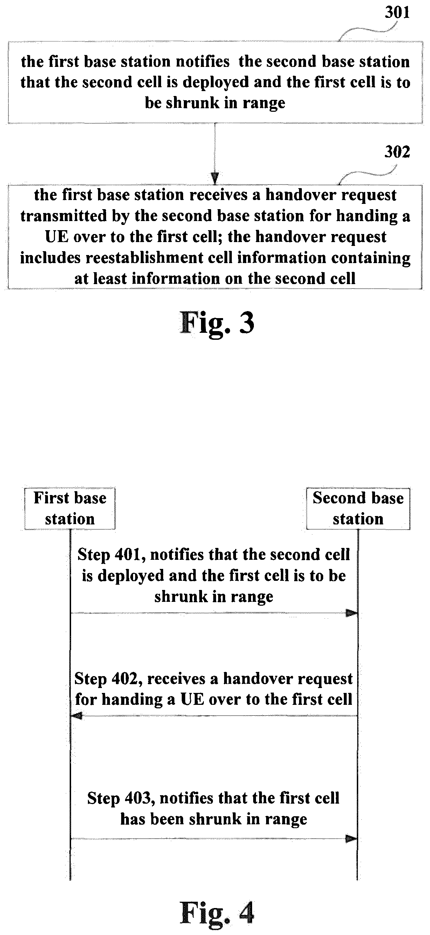

Fig. 3 is a flowchart of the information interaction method of the embodiment of the present disclosure. As shown in Fig. 3, the method includes:
step 301: the first base station notifies the second base station that the second cell is deployed and the first cell is to be shrunk in coverage; and
step 302: the first base station receives a handover request transmitted by the second base station for handing a UE over to the first cell; the handover request includes reestablishment cell information containing at least information on the second cell.

In this embodiment, as described in the scenario shown in Fig. 1, the cell splitting may be triggered by OAM or a base station, and in cells under the first base station, at least one second cell (such as a cell B) is split from the first cell (such as the cell A). Following description is given taking that only one second cell is split as an example; however, the present disclosure is not limited thereto, and is also applicable to, for example, a scenario where multiple second cells are split.

For example, when the OAM finds that a load of the first base station is relatively large, it will trigger the first base station to perform cell splitting; or when the load of the first base station exceeds a certain threshold value, the first base station triggers to perform cell splitting. The relevant art may be referred to for how to trigger or how to perform cell splitting.

In this embodiment, after the second cell (the newly-split cell) appears and configuration is completed, the first base station may notify information on the second cell to a neighboring base station. And the first base station may transmit a notification message to one or more neighboring base stations (such as the second base station).

In particular, the first base station may notify the second base station that the second cell has been deployed, notified signaling including, for example, an information element (IE) ServedCellsToAdd. Furthermore, the first base station may notify the second base station that the first cell is to be shrunk in coverage, notified signaling may be ServedCellsToAdd. However, the present disclosure is not limited thereto, for example, other IEs may be employed; or a new IE may be defined for indicating that the first cell is to be shrunk in coverage.

It should be noted that the information notifying the second base station that the second cell has been deployed and the information notifying the second base station that the first cell is to be shrunk in coverage may be contained in a notification message for transmission, and may also be contained in different notification messages for transmission, and the present disclosure is not limited thereto.

In this embodiment, when a UE under the second base station needs to be handed over to the first cell, the second base station may prepare multiple pieces of reestablishment cell information for the UE; the reestablishment cell information at least includes information on the second cell. For example, the reestablishment cell information may be contained in an information element AdditionalReestabInfo.

Fig. 4 is another flowchart of the information interaction method of the embodiment of the present disclosure. As shown in Fig. 4, the information interaction method includes:
step 401: the first base station notifies the second base station that the second cell is deployed and the first cell is to be shrunk in coverage; and
step 402: the first base station receives a handover request transmitted by the second base station for handing a UE over to the first cell; the handover request includes reestablishment cell information containing at least information on the second cell.

In this embodiment, the second base station may transmit the handover request to the first base station, the handover request may carry information HandoverPreparationInformation containing an information element AS-Context; the information element AS-Context may contain an information element Reestablishmentlnfo, the information element ReestablishmentInfo may contain an information element AdditionalReestabInfo, the information element AdditionalReestabInfo may contain the reestablishment cell information having at least the information on the second cell.

In particular implementation, for example, contents of the information element AdditionalReestablnfo may be as shown in Table 1 below:

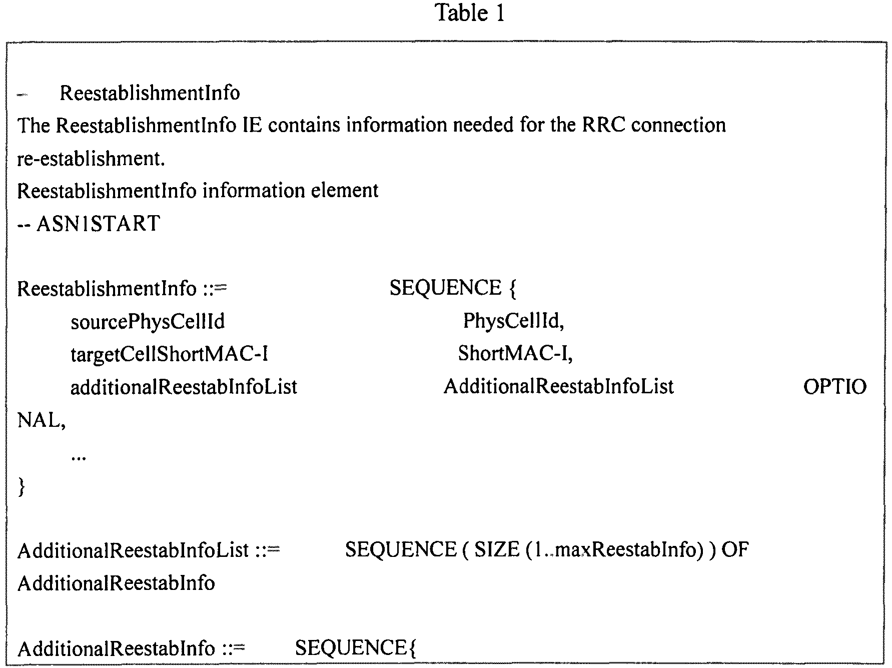

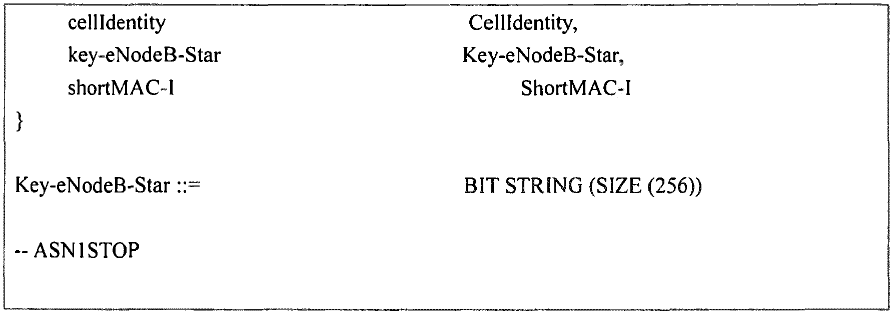

It should be noted that the above description is given only with respect to the information element AdditionalReestabInfo; however, the present disclosure is not limited thereto. Furthermore, the relevant art may be referred to for how to perform the handover and how to perform the reestablishment.

As shown in Fig. 4, the information interaction method may further include:
step 403: the first base station notifies the second base station that the first cell has been shrunk in coverage.

In this embodiment, the first base station may hand over all UEs under the coverage of the second cell originally served by the first cell to the second cell. Furthermore, after the first cell finishes an action of coverage shrinking, the first base station may notify a neighboring base station (such as the second base station) that the first cell has been shrunk in coverage.

It can be seen from the above embodiment that the base station notifies the neighboring base station that the split cell is to be shrunk in coverage; and when the UE under the neighboring base station needs to be handed over to the split cell, the source base station prepares the reestablishment cell information at least containing the information on the split cell. Hence, a reestablishment failure will not be resulted after a handover failure.

Furthermore, as the base station notifies the neighboring base station that the split cell is to be shrunk in coverage, and the reestablishment cell information at least contains the information on the split cell, a reestablishment failure may be avoided without a need of excessive signaling, and signaling overhead may be saved.

### Embodiment 2

An embodiment of the present disclosure provides an information interaction method, applicable to a second base station neighboring a first base station; at least one second cell is split from a first cell by the first base station. The method shall be described below from the second base station side, with contents identical to those in Embodiment 1 being not going to be described any further.

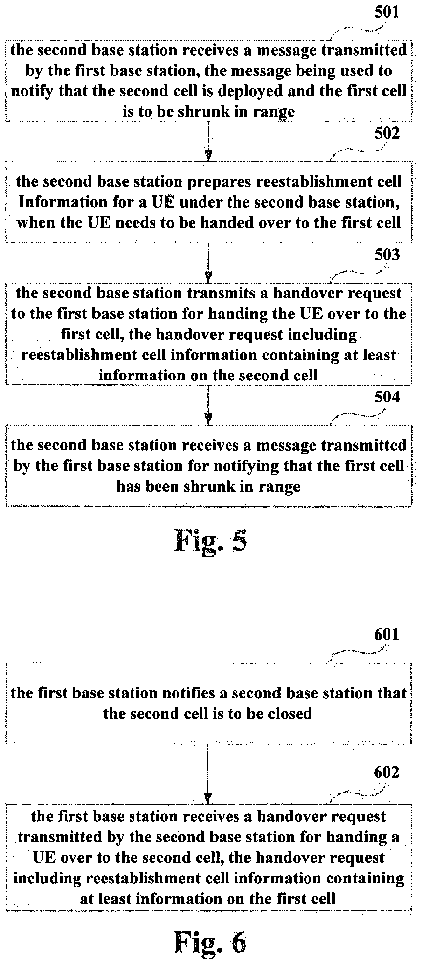

Fig. 5 is a flowchart of the information interaction method of the embodiment of the present disclosure. As shown in Fig. 5, the information interaction method includes:
step 501: the second base station receives a message transmitted by the first base station, the message being used to notify that the second cell is deployed and the first cell is to be shrunk in coverage;
step 502: the second base station prepares reestablishment cell information for a UE under the second base station, when the UE needs to be handed over to the first cell; and
step 503: the second base station transmits a handover request to the first base station for handing the UE over to the first cell, the handover request including reestablishment cell information containing at least information on the second cell.

In this embodiment, the first base station may indicate that the second cell is deployed by using an information element ServedCellsToAdd, and indicate that the first cell is to be shrunk in coverage by using an information element ServedCellInformation in the ServedCellsToAdd.

In this embodiment, the UE under the second base station may be handed over to the first cell under the first base station, and the handover request may be initiated by the second base station. The relevant art may be referred to for details of the handover.

And the handover request may carry information HandoverPreparationInformation containing an information element AS-Context; the information element AS-Context may contain an information element ReestablishmentInfo, the information element ReestablishmentInfo may contain an information element AdditionalReestabInfo, the information element AdditionalReestabInfo may contain the reestablishment cell information having at least information on the second cell.

As shown in Fig. 5, the information interaction method may further include:
step 504: the second base station receives a message transmitted by the first base station; the message is used to notify that the first cell has been shrunk in coverage.

It can be seen from the above embodiment that the base station notifies the neighboring base station that the split cell is to be shrunk in coverage; and when the UE under the neighboring base station needs to be handed over to the split cell, the source base station prepares the reestablishment cell information at least containing the information on the split cell. Hence, a reestablishment failure will not be resulted after a handover failure.

Furthermore, as the base station notifies the neighboring base station that the split cell is to be shrunk in coverage, and the reestablishment cell information at least contains the information on the split cell, a reestablishment failure may be avoided without a need of excessive signaling, and signaling overhead may be saved.

### Embodiment 3

An embodiment of the present disclosure provides an information interaction method, applicable to a first base station in which at least one second cell is merged into a first cell. The method shall be described below from the first base station side.

Fig. 6 is a flowchart of the information interaction method of the embodiment of the present disclosure. As shown in Fig. 6, the information interaction method includes:
step 601: the first base station notifies a second base station that the second cell is to be closed; and
step 602: the first base station receives a handover request transmitted by the second base station for handing a UE over to the second cell, the handover request including reestablishment cell information containing at least information on the first cell.

In this embodiment, as described in the scenario shown in Fig. 2, the cell merging may be triggered by OAM or a base station, and at least one second cell (such as a cell B) under the first base station to merged into the first cell (such as the cell A). Following description is given taking that only one second cell is merged as an example; however, the present disclosure is not limited thereto, and is also applicable to, for example, a scenario where multiple second cells are merged.

For example, when the OAM finds that a load of the first base station is relatively small, it will trigger the first base station to perform cell merging; or when the load of the first base station is below a certain threshold value, the first base station triggers to perform cell merging. The relevant art may be referred to for how to trigger or how to perform cell merging.

In this embodiment, after the first cell is expanded in coverage, the first base station may notify the second base station that the second cell is to be closed. And the first base station may indicate that the second cell is to be closed by using an information element ServedCellInformation in ServedCellsToAdd. However, the present disclosure is not limited thereto, for example, other IEs may be employed; or a new IE may be defined for indicating that the second cell is to be closed.

In this embodiment, when the UE under the second base station needs to be handed over to the second cell, the second base station may prepare multiple pieces of reestablishment cell information for the UE; the reestablishment cell information at least includes information on the first cell. Furthermore, the first base station may contain the reestablishment cell information in an information element AdditionalReestablnfo. Table 1 of Embodiment 1 may be referred to for details of the information element AdditionalReestabInfo; however, the present disclosure is not limited thereto.

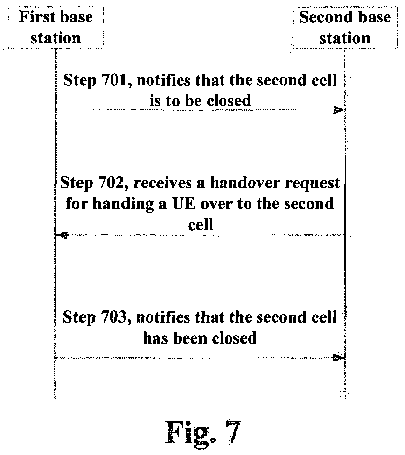

Fig. 7 is another flowchart of the information interaction method of the embodiment of the present disclosure. As shown in Fig. 7, the information interaction method includes:
step 701: the first base station notifies a second base station that the second cell is to be closed; and
step 702: the first base station receives a handover request transmitted by the second base station for handing a UE over to the second cell, the handover request including reestablishment cell information containing at least information on the first cell.

In this embodiment, the second base station may transmit the handover request to the first base station, the handover request may carry information HandoverPreparationInformation containing an information element AS-Context; the information element AS-Context may contain an information element ReestablishmentInfo, the information element ReestablishmentInfo may contain an information element AdditionalReestabInfo, the information element AdditionalReestabInfo may contain the reestablishment cell information having at least the information on the first cell.

As shown in Fig. 7, the information interaction method may further include:
step 703: the first base station notifies the second base station that the second cell has been closed.

In this embodiment, the first base station may hand over all UEs of the second cell to the first cell or another neighboring cell, and then close the second cell. And after the second cell is closed, the first base station may notify a neighboring base station (such as the second base station) that the second cell has been closed.

It can be seen from the above embodiment that the base station notifies the neighboring base station that the merged cell is to be closed; and when the UE under the neighboring base station needs to be handed over to the merged cell, the base station prepares the reestablishment cell information at least containing the information on the merged cell. Hence, a reestablishment failure will not be resulted after a handover failure.

Furthermore, as the base station notifies the neighboring base station that the merged cell is to be closed, and the reestablishment cell information at least contains the information on the merged cell, a reestablishment failure may be avoided without a need of excessive signaling, and signaling overhead may be saved.

### Embodiment 4

An embodiment of the present disclosure provides an information interaction method, applicable to a second base station neighboring a first base station; at least one second cell is merged into a first cell by the first base station. The method shall be described below from the second base station side, with contents identical to those in Embodiment 3 being not going to be described any further.

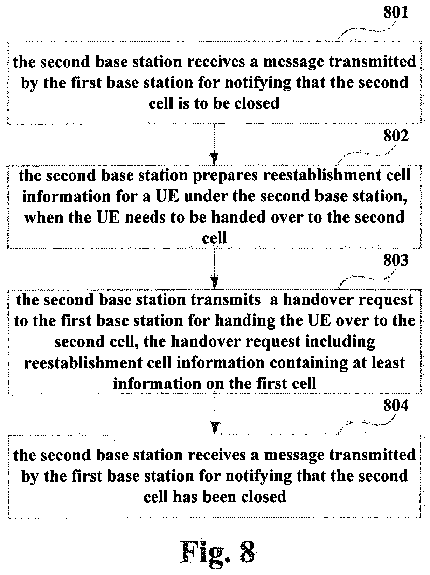

Fig. 8 is a flowchart of the information interaction method of the embodiment of the present disclosure. As shown in Fig. 8, the information interaction method includes:
step 801: the second base station receives a message transmitted by the first base station; the message is used to notify that the second cell is to be closed;
step 802: the second base station prepares reestablishment cell information for a UE under the second base station, when the UE needs to be handed over to the second cell; and
step 803: the second base station transmits a handover request to the first base station for handing the UE over to the second cell, the handover request including reestablishment cell information containing at least information on the first cell.

In this embodiment, the first base station may indicate that the second cell is to be closed by using an information element ServedCellInformation in ServedCellsToAdd, the reestablishment cell information being contained in an information element Additional Reestablnfo.

In this embodiment, the UE under the second base station may be handed over to the second cell under the first base station, and the handover request may be initiated by the second base station. The relevant art may be referred to for details of the handover.

And the handover request may carry information HandoverPreparationInformation containing an information element AS-Context; the information element AS-Context may contain an information element ReestablishmentInfo, the information element Reestablishmentlnfo may contain an information element AdditionalReestabInfo, the information element AdditionalReestablnfo may contain the reestablishment cell information having at least information on the first cell.

As shown in Fig. 8, the information interaction method may further include:
step 804: the second base station receives a message transmitted by the first base station; the message is used to notify that the second cell has been closed.

It can be seen from the above embodiment that the base station notifies the neighboring base station that the merged cell is to be closed; and when the UE under the neighboring base station needs to be handed over to the merged cell, the base station prepares the reestablishment cell information at least containing the information on the merged cell for the UE. Hence, a reestablishment failure will not be resulted after a handover failure.

Furthermore, as the base station notifies the neighboring base station that the merged cell is to be closed, and the reestablishment cell information at least contains the information on the merged cell, a reestablishment failure may be avoided without a need of excessive signaling, and signaling overhead may be saved.

### Embodiment 5

An embodiment of the present disclosure provides a base station, corresponding to the first base station in Embodiment 1 or 3, with contents identical to those in Embodiment 1 or 3 being not going to be described any further.

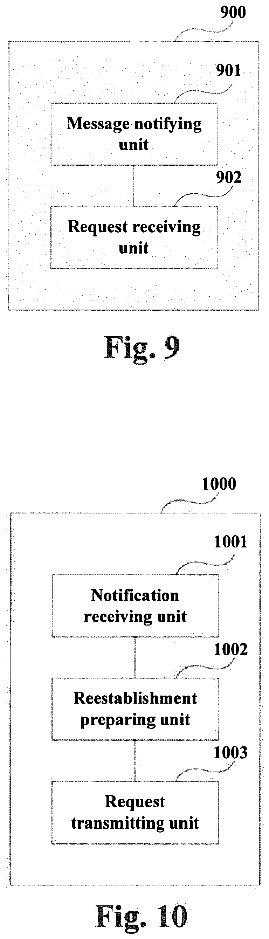

Figure 9 is a schematic diagram of a structure of the base station of the embodiment of the present disclosure. As shown in Fig. 9, the base station 900 includes: a message notifying unit 901 and a request receiving unit 902. The relevant art may be referred to for other parts of the base station 900, which are not shown in the figure.

In the invention, the base station 900 is configured to split at least one second cell from a first cell. The message notifying unit 901 is configured to notify a second base station that the second cell is deployed and the first cell is to be shrunk in coverage; and the request receiving unit 902 is configured to receive a handover request transmitted by the second cell for handing a UE over to the first cell, the handover request including reestablishment cell information containing at least information on the second cell.

In this embodiment, the message notifying unit 901 is further configured to notify the second base station that the first cell has been shrunk in coverage.

In an example implementation, the base station 900 may be configured to merge at least one second cell into the first cell. The message notifying unit 901 is configured to notify the second base station that the second cell is to be closed; and the request receiving unit 902 is configured to receive a handover request transmitted by the second cell for handing the UE over to the second cell, the handover request including reestablishment cell information containing at least information on the first cell.

In particular, after the first cell is expanded in coverage, the message notifying unit 901 is configured to notify the second base station that the second cell is to be closed; and the message notifying unit 901 may further be configured to notify the second base station that the second cell has been closed.

It can be seen from the above embodiment that the base station notifies the neighboring base station that the split cell is to be shrunk in coverage or the merged cell is to be closed; and when the UE under the neighboring base station needs to be handed over to the split cell or the merged cell, the reestablishment cell information at least containing the information on the split cell or the merged cell is prepared for the UE. Hence, not only a reestablishment failure will not be resulted after a handover failure, but also signaling overhead may be saved.

### Embodiment 6

An embodiment of the present disclosure provides a base station, corresponding to the second base station in Embodiment 2 or 4, with contents identical to those in Embodiment 2 or 4 being not going to be described any further.

Figure 10 is a schematic diagram of a structure of the base station of the embodiment of the present disclosure. As shown in Fig. 10, the base station 1000 includes: a notification receiving unit 1001, a reestablishment preparing unit 1002 and a request transmitting unit 1003. The relevant art may be referred to for other parts of the base station 1000, which are not shown in the figure.

In the invention, the base station 1000 is configured to neighbor a first base station, the first base station is configured to split at least one second cell from a first cell. The notification receiving unit 1001 is configured to receive a message transmitted by the first base station, and the message is used to notify that the second cell is deployed and the first cell is to be shrunk in coverage; the reestablishment preparing unit 1002 is configured to prepare reestablishment cell information for a UE under the base station, when the UE needs to be handed over to the first cell; and the request transmitting unit 1003 is configured to transmit a handover request to the first base station for handing the UE over to the first cell, the handover request including reestablishment cell information containing at least information on the second cell.

In particular, the notification receiving unit 1001 is further configured to receive a message transmitted by the first base station for notifying that the first cell has been shrunk in coverage.

In an example implementation, the base station 1000 may be configured to neighbor the first base station, the first base station is configured to merge at least one second cell into the first cell. The notification receiving unit 1001 is configured to receive a message transmitted by the first base station, and the message is used to notify that the second cell is to be closed; the reestablishment preparing unit 1002 is configured to prepare reestablishment cell information for the UE under the base station, when the UE needs to be handed over to the second cell; and the request transmitting unit 1003 is configured to transmit a handover request to the first base station for handing the UE over to the second cell, the handover request including reestablishment cell information containing at least information on the first cell.

In particular, the notification receiving unit 1001 is further configured to receive a message transmitted by the first base station for notifying that the second cell has been closed.

It can be seen from the above embodiment that the base station notifies the neighboring base station that the split cell is to be shrunk in coverage or the merged cell is to be closed; and when the UE under the neighboring base station needs to be handed over to the split cell or the merged cell, the reestablishment cell information at least containing the information on the split cell or the merged cell is prepared for the UE. Hence, not only a reestablishment failure will not be resulted after a handover failure, but also signaling overhead may be saved.

### Embodiment 7

An embodiment of the present disclosure provides a communication system, including the base station as described in Embodiment 5 and the base station as described in Embodiment 6.

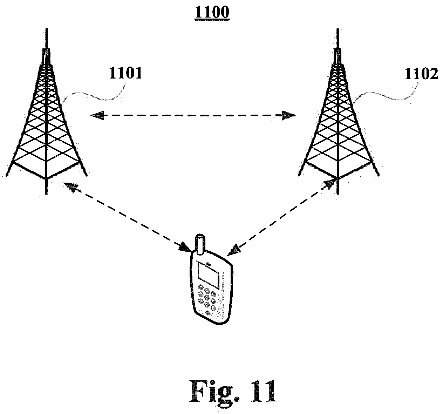

Fig. 11 is a schematic diagram of a structure of the communication system of the embodiment of the present disclosure. As shown in fig. 11, the communication system 1100 includes a first base station 1101, a second base station 1102 and a UE.

In an implementation, the first base station 1101 is configured to split at least one second cell from a first cell, notify the second base station 1102 that the second cell is deployed and the first cell is to be shrunk in coverage, and receive a handover request transmitted by the second cell 1102 for handing a UE over to the first cell, the handover request including reestablishment cell information containing at least information on the second cell;
and the second base station 1102 may be configured to neighbor the first base station 1101 and receive a message transmitted by the first base station 1101 for notifying that the second cell is deployed and the first cell is to be shrunk in coverage; prepare reestablishment cell information for a UE under the second base station 1102, when the UE needs to be handed over to the first cell; and transmit a handover request to the first base station 1101 for handing the UE over to the first cell, the handover request including reestablishment cell information containing at least information on the second cell.

In an example implementation, the first base station 1101 is configured to merge at least one second cell into a first cell, notify the second base station 1102 that the second cell is to be closed, and receive a handover request transmitted by the second cell 1102 for handing a UE over to the second cell, the handover request including reestablishment cell information containing at least information on the first cell;
and the second base station 1102 may be configured to neighbor the first base station 1101 and receive a message transmitted by the first base station 1101 for notifying that the second cell is to be closed; prepare reestablishment cell information for a UE under the second base station 1102, when the UE needs to be handed over to the second cell; and transmit a handover request to the first base station 1101 for handing the UE over to the second cell, the handover request including reestablishment cell information containing at least information on the first cell.

An embodiment of the present disclosure further provides a computer-readable program, wherein when the program is executed in a base station, the program enables a computer to carry out the information interaction method as described in embodiments 1-4 in the base station.

An embodiment of the present disclosure further provides a storage medium in which a computer-readable program is stored, wherein the computer-readable program enables a computer to carry out the information interaction method as described in embodiments 1-4 in a base station.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

One or more functional blocks and/or one or more combinations of the functional blocks in Figures may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communication combination with a DSP, or any other such configuration.

The present disclosure is described above with reference to particular embodiments. However, it should be understood by those skilled in the art that such a description is illustrative only, and not intended to limit the protection scope of the present invention as defined by the appended claims.

## Claims

1. A first base station (900), by which coverage of a cell is to be changed by cell splitting, the first base station (900) comprising:
a message notifying unit (901) configured to notify a second base station (1000) that the coverage of the cell is to be changed with the cell splitting by the first base station (900); and
a request receiving unit (902) configured to receive a handover request transmitted by a second base station (1000) for a UE served by the second base station (1000) to hand over to a first cell in a process of the cell splitting,
wherein the cell splitting comprises at least one second cell of the first base station (900) being split from the first cell of the first base station (900) and deployed, and the first cell being to be shrunk in coverage,
the handover request comprises reestablishment cell information containing at least information on the second cell that is reestablished by the UE when the UE cannot finish the handover to the first cell.

2. The first base station (900) according to claim 1, wherein the message notifying unit (901) is configured to indicate that the second cell is deployed by using an information element ServedCellsToAdd, indicate that the first cell is to be shrunk in coverage by using an information element ServedCelllnformation in the information element ServedCellsToAdd.

3. The first base station (900) according to claim 1, wherein the reestablishment cell information is contained in an information element AdditionalReestabInfo.

4. The first base station (900) according to claim 1, wherein the handover request comprises information HandoverPreparationlnformation containing an information element AS-Context, the information element AS-Context containing an information element Reestablishmentlnfo, the information element Reestablishmentlnfo containing an information element AdditionalReestablnfo, the information element AdditionalReestablnfo containing the reestablishment cell information having at least information on the second cell that is reestablished by the UE when the UE cannot finish the handover to the first cell.

5. The first base station (900) according to claim 1, wherein the message notifying unit (901) is further configured to notify the second base station (1000) that the first cell is shrunk in coverage.

6. A second base station (1000) comprising:
a notification receiving unit (1001) configured to receive a message transmitted by the first base station (900) for notifying that the coverage of the cell is to be changed with the cell splitting by the first base station (900); and
a request transmitting unit (1003) configured to transmit a handover request to a first base station (900) for a UE served by the second base station (1000) to handover to a first cell in a process of the cell splitting,
wherein the cell splitting comprises at least one second cell of the first base station (900) being split from the first cell of the first base station (900) and deployed, and the first cell being to be shrunk in coverage,
the handover request comprising reestablishment cell information containing at least information on the second cell that is reestablished by the UE when the UE cannot finish the handover to the first cell.

7. The second base station (1000) according to claim 6, wherein the second base station (1000) further comprises:
a reestablishment preparing unit (1002) configured to prepare reestablishment cell information for a UE under the base station, when the UE needs to be handed over to the first cell.

8. The second base station (1000) according to claim 6, wherein the notification receiving unit is further configured to receive a message transmitted by the first base station (900) for notifying that the first cell is shrunk in coverage.

9. A communication system, comprising:
a first base station (900) as claimed in claim 1; and
a second base station (1000) as claimed in claim 6.

## Patentansprüche

1. Erste Basisstation (900), durch die eine Abdeckung einer Zelle durch Zellenteilung geändert werden soll, wobei die erste Basisstation (900) umfasst:
eine Nachrichtenbenachrichtigungseinheit (901), die dazu ausgelegt ist, eine zweite Basisstation (1000) zu benachrichtigen, dass die Abdeckung der Zelle mit der Zellenteilung durch die erste Basisstation (900) geändert werden soll; und
eine Anfrageempfangseinheit (902), dazu ausgelegt ist, eine Handover-Anfrage zu empfangen, die von einer zweiten Basisstation (1000) für eine von der zweiten Basisstation (1000) bediente UE gesendet wird, um in einem Prozess der Zellenaufteilung ein Handover an eine erste Zelle durchzuführen,
wobei die Zellenteilung umfasst, dass mindestens eine zweite Zelle der ersten Basisstation (900) von der ersten Zelle der ersten Basisstation (900) aufgeteilt und bereitgestellt wird, und die erste Zelle in der Abdeckung zu verkleinern ist,
die Handover-Anfrage Zellenwiederherstellungsinformationen umfasst, die zumindest Informationen über die zweite Zelle enthalten, die durch das UE wiederhergestellt wird, wenn das UE das Handover an die erste Zelle nicht beenden kann.

2. Erste Basisstation (900) nach Anspruch 1, wobei die Nachrichtenbenachrichtigungseinheit (901) dazu ausgelegt ist, anzuzeigen, dass die zweite Zelle bereitgestellt ist, indem ein Informationselement ServedCellsToAdd verwendet wird, anzuzeigen, dass die Abdeckung der ersten Zelle zu verkleinern ist, indem ein Informationselement ServedCelllnformation in dem Informationselement ServedCellsToAdd verwendet wird.

3. Erste Basisstation (900) nach Anspruch 1, wobei die Zellenwiederherstellungsinformationen in einem Informationselement AdditionalReestablnfo enthalten sind.

4. Erste Basisstation (900) nach Anspruch 1, wobei die Handover-Anfrage Informationen HandoverPreparationlnformation umfasst, die ein Informationselement AS-Context enthalten, wobei das Informationselement AS-Context ein Informationselement Reestablishmentlnfo enthält, wobei das Informationselement Reestablishmentlnfo ein Informationselement AdditionalReestablnfo enthält, wobei das Informationselement AdditionalReestablnfo die Zellenwiederherstellungsinformationen enthält, die zumindest Informationen über die zweite Zelle aufweisen, die durch das UE wiederhergestellt wird, wenn das UE das Handover an die erste Zelle nicht beenden kann.

5. Erste Basisstation (900) nach Anspruch 1, wobei die Nachrichtenbenachrichtigungseinheit (901) ferner dazu ausgelegt ist, die zweite Basisstation (1000) zu benachrichtigen, dass die Abdeckung der ersten Zelle verkleinert ist.

6. Zweite Basisstation (1000), umfassend:
eine Benachrichtigungsempfangseinheit (1001), die dazu ausgelegt ist, eine von der ersten Basisstation (900) gesendete Nachricht zum Benachrichtigen, dass die Abdeckung der Zelle mit der Zellenaufteilung durch die erste Basisstation (900) geändert werden soll, zu empfangen; und
eine Anfragesendeeinheit (1003), die dazu ausgelegt ist, eine Handover-Anfrage an eine erste Basisstation (900) für ein UE, das von der zweiten Basisstation (1000) bedient wird, zu senden, um in einem Prozess der Zellenaufteilung ein Handover an eine erste Zelle durchzuführen,
wobei die Zellenaufteilung umfasst, dass mindestens eine zweite Zelle der ersten Basisstation (900) von der ersten Zelle der ersten Basisstation (900) aufgeteilt und bereitgestellt wird, und die erste Zelle in der Abdeckung zu verkleinern ist,
wobei die Handover-Anfrage Zellenwiederherstellungsinformationen umfasst, die zumindest Informationen über die zweite Zelle enthalten, die durch das UE wiederhergestellt wird, wenn das UE das Handover an die erste Zelle nicht beenden kann.

7. Zweite Basisstation (1000) nach Anspruch 6, wobei die zweite Basisstation (1000) ferner umfasst:
eine Wiederherstellungsvorbereitungseinheit (1002), die dazu ausgelegt ist, Zellenwiederherstellungsinformationen für ein UE unter der Basisstation vorzubereiten, wenn ein Handover des UE an die erste Zelle durchgeführt werden muss.

8. Zweite Basisstation (1000) nach Anspruch 6, wobei die Benachrichtigungsempfangseinheit ferner dazu ausgelegt ist, eine von der ersten Basisstation (900) gesendete Nachricht zum Benachrichtigen, dass die Abdeckung der ersten Zelle verkleinert ist, zu empfangen.

9. Kommunikationssystem, umfassend:
eine erste Basisstation (900) nach Anspruch 1; und
eine zweite Basisstation (1000) nach Anspruch 6.

## Revendications

1. Une première station de base (900), par laquelle la couverture d'une cellule doit être modifiée par une division de cellules, la première station de base (900) comprenant :
une unité de notification de message (901) configurée pour notifier à une deuxième station de base (1000) que la couverture de la cellule doit être modifiée avec la division de cellules par la première station de base (900) ; et
une unité de réception de demande (902) configurée pour recevoir une demande de transfert transmise par une deuxième station de base (1000) pour qu'un UE desservi par la deuxième station de base (1000) effectue un transfert vers une première cellule dans un processus de division de cellules,
dans laquelle la division de cellules comprend au moins une deuxième cellule de la première station de base (900) qui est séparée de la première cellule de la première station de base (900) et déployée, et la première cellule devant être réduite en couverture,
la demande de transfert comprend des informations de cellule de rétablissement contenant au moins des informations sur la deuxième cellule qui est rétablie par l'UE lorsque l'UE ne peut pas terminer le transfert vers la première cellule.

2. La première station de base (900) selon la revendication 1, dans laquelle l'unité de notification de message (901) est configurée pour indiquer que la deuxième cellule est déployée en utilisant un élément d'information ServedCellsToAdd, indiquer que la première cellule doit être réduite en couverture en utilisant un élément d'information ServedCellInformation dans l'élément d'information ServedCellsToAdd.

3. La première station de base (900) selon la revendication 1, dans laquelle les informations de cellule de rétablissement sont contenues dans un élément d'information AdditionalReestabInfo.

4. La première station de base (900) selon la revendication 1, dans laquelle la demande de transfert comprend des informations HandoverPreparationInformation contenant un élément d'information AS-Context, l'élément d'information AS-Context contenant un élément d'information ReestablishmentInfo, l'élément d'information ReestablishmentInfo contenant un élément d'information AdditionalReestabInfo, l'élément d'information AdditionalReestablnfo contenant les informations de cellule de rétablissement ayant au moins des informations sur la deuxième cellule qui est rétablie par l'UE lorsque l'UE ne peut pas terminer le transfert vers la première cellule.

5. La première station de base (900) selon la revendication 1, dans laquelle l'unité de notification de message (901) est en outre configurée pour notifier à la deuxième station de base (1000) que la couverture de la première cellule est réduite.

6. Une deuxième station de base (1000) comprenant :
une unité de réception de notification (1001) configurée pour recevoir un message transmis par la première station de base (900) pour notifier que la couverture de la cellule doit être modifiée avec la division de cellules par la première station de base (900) ; et
une unité de transmission de requête (1003) configurée pour transmettre une requête de transfert à une première station de base (900) pour qu'un UE desservi par la deuxième station de base (1000) effectue un transfert vers une première cellule dans un processus de division de cellules,
dans laquelle la division de cellules comprend au moins une deuxième cellule de la première station de base (900) qui est séparée de la première cellule de la première station de base (900) et déployée, et la première cellule devant être réduite en couverture,
la demande de transfert comprenant des informations de cellule de rétablissement contenant au moins des informations sur la deuxième cellule qui est rétablie par l'UE lorsque l'UE ne peut pas terminer le transfert vers la première cellule.

7. La deuxième station de base (1000) selon la revendication 6, dans laquelle la deuxième station de base (1000) comprend en outre :
une unité de préparation de rétablissement (1002) configurée pour préparer des informations de cellule de rétablissement pour un UE sous la station de base, lorsque l'UE doit être transféré vers la première cellule.

8. La deuxième station de base (1000) selon la revendication 6, dans laquelle l'unité de réception de notification est en outre configurée pour recevoir un message transmis par la première station de base (900) pour notifier que la couverture de la première cellule est réduite.

9. Un système de communication, comprenant :
une première station de base (900) selon la revendication 1 ; et
une deuxième station de base (1000) selon la revendication 6.
